# EUROPEAN PATENT SPECIFICATION

(11) **EP 3 890 246 B1**
(45) Date of publication and mention of the grant of the patent: **11.06.2025**
(21) Application number: 18941509.4
(22) Date of filing: 29.11.2018
(51) Int. Cl.: H04L 5/00, H04B 7/06

(54) **CSI MEASUREMENT FEEDBACK METHOD AND APPARATUS, AND STORAGE MEDIUM**
VERFAHREN UND VORRICHTUNG ZUR RÜCKKOPPLUNG VON CSI-MESSUNGEN UND SPEICHERMEDIUM
PROCÉDÉ ET APPAREIL DE RÉTROACTION DE MESURE DE CSI, ET SUPPORT DE STOCKAGE

(43) Date of publication of application: 06.10.2021
(73) Proprietor: Beijing Xiaomi Mobile Software Co., Ltd., Beijing 100085 (CN)
(72) Inventor: LI, Mingju, Beijing 100085 (CN)
(74) Representative: Gunzelmann, Rainer
(86) International application number: PCT/CN2018/118285
(87) International publication number: WO 2020/107346

(56) References cited:
- WO-A1-2016/022841
- WO-A1-2017/061744
- CN-A- 106 105 344
- CN-A- 108 282 212
- CN-A- 108 365 997
- HUAWEI ET AL: "Potential AS layer impacts on SL connection setup and configuration in unicast", vol. RAN WG2, no. Spokane, USA; 20181112 - 20181116, 12 November 2018 (2018-11-12), XP051556095, Retrieved from the Internet <URL:http://www.3gpp.org/ftp/Meetings%5F3GPP%5FSYNC/RAN2/Docs/R2%2D1816517%2Ezip> [retrieved on 20181112]
- CATT: "Discussion on resource allocation mechanism in NR V2X", 3GPP TSG RANI MEETING #95, RL-1812620, 16 November 2018 (2018-11-16), XP051554576
- INTEL CORPORATION: "Summary for NR-V2X AI - 7.2.4.1.4 Resource Allocation Mechanism", 3GPP TSG RAN WG1 MEETING #95, RL-1814260, 16 November 2018 (2018-11-16), XP051494712

## Description

### TECHNICAL FIELD

The present disclosure relates to a field of communication technology, and particularly to a method and an apparatus for CSI (Channel State Information) measurement feedback in a V2X (Vehicle to Everything) direct communication scenario and a storage medium.

### BACKGROUND

In the V2X technology, an on-board device may perform direct communication with other devices (such as other on-board devices, roadside infrastructure, and the like) can through the sidelink. Direct communication has characteristics of short delay and low overhead.

The direct communication scenario in LTE (Long Term Evolution) V2X technology does not support unicast and multicast communication, but only supports broadcast communication. Since it is broadcast communication, before the transmitting device transmits information to the receiving device in direct communication with the transmitting device, the receiving device does not need to measure and feedback the CSI.

For the direct communication scenario in 5G NR (New Radio) V2X technology, with the emergence of requirements of new businesses, it is necessary to support unicast and multicast communication. However, there is no relevant CSI measurement feedback scheme for the V2X direct communication scenario currently.

The 3GPP draft document R2-1816517: "Potential AS layer impacts on SL connection setup and configuration in unicast", by Huawei and HiSilicon, studies how to support unicast, groupcast and broadcast over sidelink in NR.

CN108282212A provides a method for processing channel state information. The method comprises the following steps: receiving configuration information for channel state informationmeasurement from wireless network equipment by user equipment, wherein the configuration information comprises information of a resource for the channel state information measurement and measurement attribute information for indicating the resource, and the measurement attribute comprises channel measurement, or X types of interference measurements, or the channel measurement and X types of interference measurements, wherein X is an integer greater than or equal to 1; and performing channel state information measurement by the user equipment according to the configuration information and feeding back the channel state information. According to the method provided by the invention, different requirements for the channel state information measurement in some different scenes of multi-point collaboration in a future network can be met.

WO2016/022841A1 determines device-to-device (D2D) transmission parameters for signal transmission over a D2D communication link between a first user equipment (UE) device and a second UE device. The eNB instructs the first UE device to transmit a reference signal that is received by the second UE device. The second UE device reports D2D channel characteristic information indicative of the received reference signal. Based on the D2D channel characteristic information, the base station determines the D2D transmission parameters and provides the parameters to the first UE device.

### SUMMARY

Embodiments of the present disclosure provide a method and an apparatus for CSI measurement feedback in a V2X direct communication scenario and a storage medium.

The invention is set out in the appended set of claims.

The technical solutions provided by embodiments of the present disclosure include the following beneficial effects.

The base station configures the CSI measurement reference signal resource set for the first device in the V2X direct communication, and the first device transmits CSI measurement configuration information to the second device performing direct communication with the first device, so that the second device transmits the CSI measurement feedback information to the first device after the second device performs CSI measurement according to the CSI measurement configuration information. In this way, for the V2X direct communication scenario, a method for CSI measurement feedback is provided, so that a more suitable MCS can be selected for information transmission and the spectrum efficiency is improved.

It should be understood that both the foregoing general description and the following detailed description are exemplary and explanatory only and are not restrictive of the disclosure.

### BRIEF DESCRIPTION OF THE DRAWINGS

The drawings herein are incorporated into the specification and constitute a part of the specification, show embodiments in conformity with the present disclosure, and explain the principle of the present disclosure together with the specification.
FIG 1 is a schematic diagram of a network architecture, which is applied to embodiments not forming part of the present disclosure.
FIG 2 is a flow chart illustrating a method for CSI measurement feedback in a V2X direct communication scenario according to an embodiment.
FIG 3 is a flow chart illustrating a method for CSI measurement feedback in a V2X direct communication scenario according to another embodiment.
FIG 4 is a block diagram illustrating an apparatus for CSI measurement feedback in a V2X direct communication scenario according to an embodiment.
FIG 5 is a block diagram illustrating an apparatus for CSI measurement feedback in a V2X direct communication scenario according to another embodiment.
FIG 6 is a schematic diagram illustrating a device in a V2X direct communication scenario according to an embodiment not forming part of the present invention.

### DETAILED DESCRIPTION

Reference will now be made in detail to embodiments, examples of which are illustrated in the accompanying drawings. When the following description refers to the accompanying drawings, the same numbers in different drawings represent the same or similar elements unless otherwise represented. The implementations described in the following embodiments do not represent all implementations consistent with the present disclosure. On the contrary, they are only examples of devices and methods consistent with some aspects of the present disclosure as detailed in the appended claims.

The network architecture and business scenario in embodiments of the present disclosure is to explain the technical solutions of embodiments of the present disclosure more clearly, and does not constitute a limit to the technical solutions provided by the embodiments of the present disclosure. Those of ordinary skill in the art will know that with the evolution of network architecture and the emergence of new business scenarios, the technical solutions provided in the embodiments of the present disclosure are equally applicable to similar technical problems.

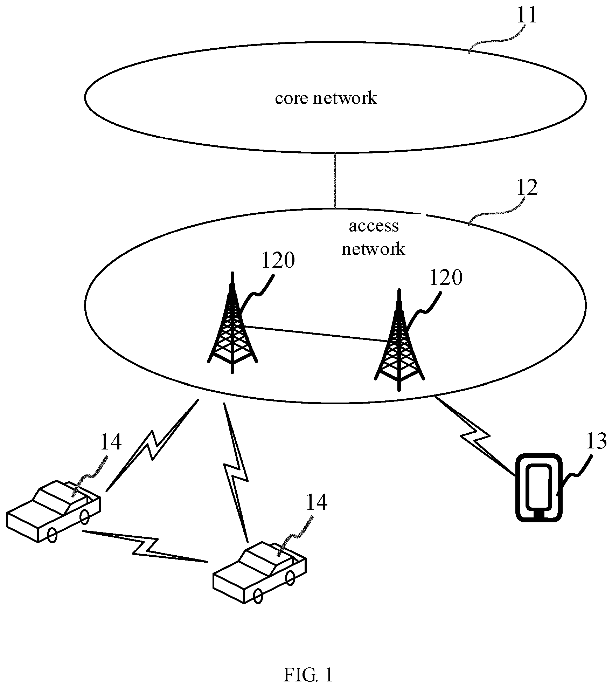

FIG 1 is a schematic diagram of a network architecture, which is applied to embodiments not forming part of the present disclosure. The network architecture may be a network architecture of a C-V2X system. C refers to Cellular, and the C-V2X system is an on-board wireless communication system based on the evolution of cellular network communication systems such as 3G, 4G, or 5G The network architecture may include: a core network 11, an access network 12, a terminal 13, and a vehicle 14.

The core network 11 includes several core network devices. The function of the core network device is mainly to provide user connections, manage users and complete bearing of services, and provide an interface to the external network as the bearer network. For example, the core network of the LTE (Long Term Evolution) system may include MME (Mobility Management Entity), S-GW (Serving Gateway), and P-GW (PDN Gateway) and other devices. The core network of the 5G NR system may include AMF (Access and Mobility Management Function) entities, UPF (User Plane Function) entities and SMF (Session Management Function) entities and other devices.

The access network 12 includes several access network devices 120. The access network device 120 and the core network device 110 communicate with each other through a certain air interface technology, such as the S1 interface in the LTE system, and the NG interface in the 5G NR system. The access network device 120 may be a BS (Base Station), which is an apparatus employed in the access network and configured to provide wireless communication function to the terminal. The base station may include various forms of macro evolved NodeB, micro evolved NodeB, relay stations, access points and the like. In systems adopting different radio access technologies, the names of devices with base station functions may be different. For example, in LTE systems, the device is called eNodeB or eNB; in 5G NR systems, the device is called gNodeB or gNB. With the evolution of the communication technique, the name of "base station" may change. For the sake of easy description, in embodiments of the present disclosure, the above apparatuses that provides wireless communication for the terminal are collectively called access network devices.

The terminal 13 may include various devices with wireless communication functions, such as on-board devices, wearable devices, computing device or other processing devices connected to a wireless modem, as well as various forms of User Equipment (UE), Mobile Station (MS), terminal device, etc. For the sake of easy description, the above devices are collectively called terminals. The access network device 120 and the terminal 13 communicate through some kind of the air interface technologies, such as Uu interface.

The vehicle 14 may be an autonomous vehicle or a non-autonomous vehicle. The vehicle 14 is equipped with an on-board device, and the vehicle 14 realizes communication with other vehicles, terminal 13 and other devices, such as RSU (Road Side Unit), through the on-board device. The on-board device may also be called an on-board terminal, an on-board communication apparatus, or other names, which is not limited in the embodiments of the present disclosure. The on-board device may be an apparatus integrated in the on-board T-BOX (Telematics BOX), or it may be an apparatus separate from the vehicle body. In addition, the on-board device may be installed in the vehicle 14 before the vehicle 14 leaves the factory, or may be installed in the vehicle 14 after the vehicle 14 leaves the factory.

The on-board device of the vehicle 14 and other devices (such as other on-board devices, terminal 13, RSU and the like) can communicate with each other through a direct communication interface (such as a PC5 interface). Accordingly, the communication link established based on the direct communication interface may be called a direct link or a sidelink. In addition, for the communication between the on-board device of the vehicle 14 and other devices, the access network 12 and the core network 11 may be used for transfer, that is, the communication link between the terminal 13 and the access network device 120 in the original cellular network is used for communication. Compared with the communication based on the Uu interface, the communication based on the direct communication interface has the characteristics of short delay and low overhead, which is suitable for communication between on-board device and other peripheral devices that are in geographical proximity.

The above network architecture illustrated in FIG 1 may implement V2X business scenarios. The above network architecture may also include devices such as RSUs, V2X application servers, and V2X control function nodes, which are not limited in embodiments of the present disclosure. In addition, the technical solutions described in embodiments of the present disclosure may be applied to the 5G NR system, and may also be applicable to subsequent evolution systems of the 5G NR system.

In embodiments of the present disclosure, a method for CSI measurement feedback is provided for the direct communication scenario in the above V2X business scenario, so that a more appropriate MCS (Modulation and Coding Scheme) can be selected for information transmission and the spectrum efficiency is improved.

In embodiments of the present disclosure, the first device and the second device are devices at both ends of the direct communication in the V2X business scenario, and the sidelink may be established by the first device and the second device through a direct communication interface (such as a PC5 interface). The sidelink is used for interaction of user data and control signaling. For example, the first device may be an on-board device of the vehicle 14 in the network architecture illustrated in FIG 1, and the second device may be an on-board device of another vehicle, or a terminal 13 or an RSU. For another example, the first device may be the terminal 13 in the network architecture illustrated in FIG 1, and the second device may be other terminals, and may also be an on-board device of the vehicle 14 or an RSU. In some embodiments, for the same device (for example, the same on-board device or the same terminal), it may be used as the first device in some scenarios, and may also be used as the second device in other scenarios.

Hereinafter, the technical solution of the present disclosure will be introduced and explained through several embodiments.

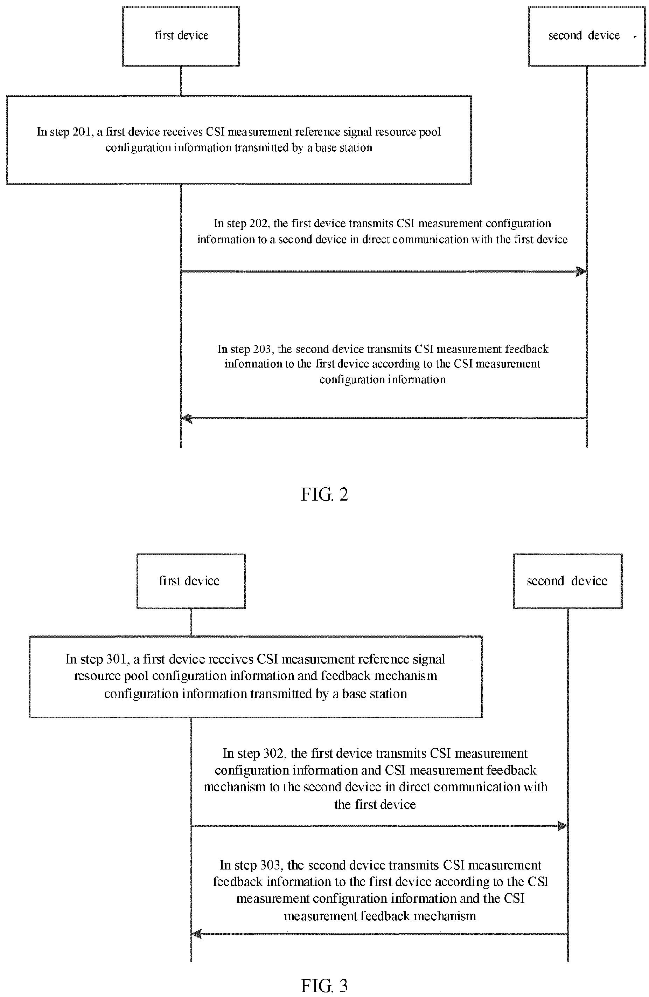

FIG 2 is a flow chart illustrating a method for CSI measurement feedback in a V2X direct communication scenario according to an embodiment. This method is applied to the network architecture illustrated in FIG 1. This method includes the following steps (201-203).

In step 201, a first device receives CSI measurement reference signal resource pool configuration information transmitted by a base station.

The base station predefines the resource pool of the CSI measurement reference signal resource set, and transmits the CSI measurement reference signal resource set to the device performing V2X direct communication through the CSI measurement reference signal resource pool configuration information. The CSI measurement reference signal resource set includes n CSI measurement reference signal resources, in which n is a positive integer. The CSI measurement reference signal resource pool configuration information includes identification information of n CSI measurement reference signal resources in the CSI measurement reference signal resource set. The identification information of the CSI measurement reference signal resource is configured to uniquely indicate the CSI measurement reference signal resource, and different CSI measurement reference signal resources have different identification information.

In embodiments of the present disclosure, the CSI measurement reference signal resources refer to reference signal resources used to measure CSI. The CSI measurement reference signal resource set includes at least one of the following CSI measurement reference signal resources: a sidelink NZP CSI-RS (sidelink Non Zero Power Channel State Information-Reference Signal) resource, a sidelink ZP CSI-RS (sidelink Zero Power Channel State Information-Reference Signal) resource, a sidelink DRS (sidelink Discovery Reference Signal) resource, a sidelink SSB (Sidelink Synchronization Signal Block) resource, and a sidelink DMRS (sidelink Demodulation Reference Signal).

The above sidelink DRS resource includes at least one sidelink PSS (sidelink Primary Synchronized Signal), at least one sidelink SSS (sidelink Secondary Synchronized Signal), and at least one sidelink PBCH (sidelink Physical Broadcast Channel). The above sidelink SSB resource may also include at least one sidelink PSS, at least one sidelink SSS, and at least one sidelink PBCH. SSB may be called SS/PBCH Block.

It is to be noted that the "sidelink" described in the disclosure may also be referred to as "V2X". The sidelink added before by a certain object means that the object is an object used for a sidelink or a V2X. For example, the sidelink NZP CSI-RS resource indicates the NZP CSI-RS resource used for a sidelink or a V2X. For another example, the sidelink SSB resource represents an SSB resource used for a sidelink or a V2X.

In addition, the resource pool of the CSI measurement reference signal resource set is similar to the resource pool of the PSSCH (Physical Sidelink Share Channel), of the PSCCH (Physical Sidelink Control Channel), of the PSDCH (Physical Sidelink Discovery Channel) or of the sidelink DMRS, and the resource pool of the CSI measurement reference signal resource set may or may not overlap with the other resource pools mentioned above, which is not limited in embodiments of the present disclosure.

The CSI measurement reference signal resource pool configuration information further includes at least one of a subcarrier spacing, a cyclic prefix (CP), a frequency domain position, a time domain position, a Port, and a Quasi co-location indication corresponding to the CSI measurement reference signal resource.

The frequency domain position corresponding to the CSI measurement reference signal resource refers to the frequency domain position occupied by the CSI measurement reference signal resource. For example, a size and position of a section of bandwidth may be provided, and RB (Resource Block)/RBs, RE (Resource Element)/REs or subcarrier/subcarriers which occupied the bandwidth is/are provided.

The time domain position corresponding to the CSI measurement reference signal resource refers to the time domain position occupied by the CSI measurement reference signal resource, including period, offset, slot, mini-slot, symbol and other time-domain location information.

The port corresponding to the CSI measurement reference signal resource refers to the antenna port through which the transmitter transmits the CSI measurement reference signal resource. When the CSI measurement reference signal resource pool configuration information includes the port configuration corresponding to the CSI measurement reference signal resource, considering that the capabilities of respective transmitters are different, a lower configuration may be included. When the CSI measurement reference signal resource pool configuration information does not include the port configuration corresponding to the CSI measurement reference signal resource, the transmitter can dynamically indicate the receiver, for example, by using SCI (Sidelink Control Information) signaling in the PSCCH.

The Quasi co-location indicator corresponding to the CSI measurement reference signal resource is used to indicate that a receiving beam same as the measurement reference signal in the indicator needs to be used for reception and measurement when measuring the CSI on the resource. The indicator may include sidelink RS ID of type D.

In step 202, the first device transmits CSI measurement configuration information to a second device in direct communication with the first device.

After obtaining the CSI measurement reference signal resource set configured by the base station, the first device may select m CSI measurement reference signal resources from the n CSI measurement reference signal resources included in the resource set for the second device in direct communication with the first device to perform CSI measurement, in which m is a positive integer less than or equal to n.

Alternatively or additionally, the first device transmits the CSI measurement configuration information to the second device through the PSCCH. For example, the first device transmits a first SCI signaling to the second device through the PSCCH, in which the first SCI signaling includes the CSI measurement configuration information. Alternatively or additionally, the first SCI signaling further includes identification information of the transmitter (that is, the first device) and/or identification information of the receiver (that is, the second device).

The CSI measurement configuration information includes identification information of m CSI measurement reference signal resources in n CSI measurement reference signal resources. Alternatively or additionally, the CSI measurement configuration information further includes at least one of the following information: a subcarrier spacing, a cyclic prefix (CP), a frequency domain position, a time domain position, a Port, and a Quasi co-location indication corresponding to the CSI measurement reference signal resource.

In addition, the format of a SCI signaling used to transmit the CSI measurement configuration information may be distinguished from the format of a SCI signaling used to indicate the resource used for data transmission.

In step 203, the second device transmits CSI measurement feedback information to the first device according to the CSI measurement configuration information.

The second device performs CSI measurement according to the CSI measurement configuration information, and then transmits the measurement result to the first device through the CSI measurement feedback information. Correspondingly, the first device receives the CSI measurement feedback information transmitted by the second device.

The CSI measurement feedback information includes at least one of the following: a CQI (Channel Quality Indicator), a PMI (Precoding Matrix Indicator), a RI (Rank Indication), a L1-RSRP (Layer 1-Reference Signal Received Power), a L1-SINR (Layer 1-Signal to Interference and Noise Ratio), and the identification information of the measured CSI measurement reference signal resources.

For example, when the transmission and reception between the first device and the second device are not based on beams, the CSI measurement feedback information may include at least one of CQI, PMI, and RI, and Alternatively or additionally, further includes the identification information of the measured CSI measurement reference signal resource, such as sidelink NZP CSI-RS ID, sidelink ZP CSI-RS ID, sidelink DRS ID, sidelink SSB ID, or sidelink DMRS ID.

For another example, when the transmission and reception between the first device and the second device are based on beams and the aim of the measurement is to select beams, the CSI measurement feedback information may include the L1-RSRP and/or the L1-RSRP, and may further include the identification information of the measured CSI measurement reference signal resource, such as sidelink NZP CSI-RS ID, sidelink ZP CSI-RS ID, sidelink DRS ID, sidelink SSB ID, or sidelink DMRS ID.

In addition, the second device may transmit the CSI measurement feedback information to the first device through PSFCH (Physical Sidelink Feedback Channel), and may also transmit the CSI measurement feedback information to the first device through PSSCH.

Alternatively or additionally, the second device transmits a second SCI signaling to the first device, in which the second SCI signaling includes the CSI measurement feedback information. Alternatively or additionally, the second SCI signaling further includes identification information of the transmitter (that is, the second device) and/or identification information of the receiver (that is, the first device).

In summary, in the technical solution provided in embodiments of the present disclosure, the base station configures the CSI measurement reference signal resource set for the first device in the V2X direct communication, and the first device transmits CSI measurement configuration information to the second device in direct communication with the first device, so that the second device transmits the CSI measurement feedback information to the first device after the second device performs CSI measurement according to the CSI measurement configuration information. In this way, for the V2X direct communication scenario, a method for CSI measurement feedback is provided, so that a more suitable MCS can be selected for information transmission and the spectrum efficiency is improved.

FIG 3 is a flow chart illustrating a method for CSI measurement feedback in a V2X direct communication scenario according to another embodiment. This method is applied to the network architecture illustrated in FIG. 1. This method includes the following steps (301-303).

In step 301, a first device receives CSI measurement reference signal resource pool configuration information and feedback mechanism configuration information transmitted by a base station.

For the introduction and description of the CSI measurement reference signal resource pool configuration information, please refer to the embodiment in FIG 2, which will not be elaborated in this embodiment.

In this embodiment, the base station further predefines multiple CSI measurement feedback mechanisms, and transmits the multiple CSI measurement feedback mechanisms to the device performing V2X direct communication through the feedback mechanism configuration information. For example, the base station may transmit the CSI measurement reference signal resource pool configuration information and the feedback mechanism configuration information to the first device through system information. In addition, the CSI measurement reference signal resource pool configuration information and the feedback mechanism configuration information may be transmitted in the same piece of system information, or may be transmitted in two different pieces of system information, which is not limited in embodiments of the present disclosure.

The feedback mechanism configuration information includes configuration information of k types of CSI measurement feedback mechanisms, in which k is a positive integer. The CSI measurement feedback mechanism is configured to indicate the manner for performing CSI measurement and feedback. Alternatively or additionally, the above k types of CSI measurement feedback mechanisms include at least one of the following: a periodic measurement feedback mechanism, an aperiodic measurement feedback mechanism, and a semi-static measurement feedback mechanism.

The periodic measurement feedback mechanism refers to periodically perform CSI measurement and feedback. The aperiodic measurement feedback mechanism refers to non-periodically perform CSI measurement and feedback. For example, a certain device performs one CSI measurement and feedback after receiving the CSI feedback trigger signaling transmitted by another device. The semi-static measurement feedback mechanism refers to that a certain device starts to perform CSI measurement and feedback after receiving the CSI feedback trigger signaling transmitted by another device, and stops performing the CSI measurement and feedback when the measurement reaches a certain number of times or when it receives a stop feedback trigger signaling transmitted by another device.

Alternatively or additionally, the configuration information of the CSI measurement feedback mechanism includes at least one of the following: time domain configuration information, frequency domain configuration information, and feedback content configuration information.

The time domain configuration information is configured to indicate a time when the CSI measurement feedback information is transmitted. For example, for the periodic measurement feedback mechanism, its time domain configuration information may include period, start time offset, frame, subframe, slot, mini-slot, symbol and other information. For another example, for the non-periodic measurement feedback mechanism, since only one CSI measurement and feedback is performed, the time domain configuration information may include the feedback time. For example, the specific feedback time may be indicated by frame, subframe, slot, mini-slot, symbol and other information, or an offset is provided, and the feedback time is the offset plus the time of the CSI feedback trigger signaling. For another example, for the semi-static measurement feedback mechanism, its time-domain configuration information may include the start feedback time and period, and Alternatively or additionally also include the stop feedback time or the feedback duration, in which the start feedback time and the stop feedback time may be indicated clearly by the frame, subframe, slot, mini-slot, symbol and other information, and the feedback duration may indicate the number of time units (such as frame, subframe, slot, mini-slot, symbol) in which feedback is performed. In addition, the time for the first feedback of the CSI measurement feedback information may also be calculated by adding a time interval to the transmitting time of the CSI feedback trigger signaling. The time interval may be predefined in the standard or protocol, or pre-configured by the base station, or transmitted by the first device to the second device, which is not limited in embodiments of the present disclosure. In addition, the CSI feedback trigger signaling is transmitted from the transmitter to the receiver, and is a signaling for instructing the receiver to perform CSI measurement and feedback. The CSI feedback trigger signaling may be a SCI signaling. In addition, for the semi-static measurement feedback mechanism, the stop feedback time or the feedback duration described above may be carried in the configuration information of the CSI measurement feedback mechanism and transmitted through another separate signaling, which is not limited in embodiments of the present disclosure.

The frequency domain configuration information is configured to indicate frequency domain resources used for transmitting the CSI measurement feedback information. Since the CSI measurement feedback information may be transmitted through PSFCH or PSSCH, the frequency domain resource may be a frequency domain resource allocated for the PSFCH or PSSCH.

The feedback content configuration information is configured to indicate content included in the CSI measurement feedback information. For example, the CSI measurement feedback information includes at least one of the following contents: CQI, PMI, RI, L1-RSRP, L1-SINR, and the identification information of the measured CSI measurement reference signal resource.

In step 302, the first device transmits CSI measurement configuration information and CSI measurement feedback mechanism to the second device in direct communication with the first device.

For the introduction and description of the CSI measurement configuration information, please refer to the embodiment in FIG 2, which will not be elaborated in this embodiment.

In this embodiment, in addition to transmitting the CSI measurement configuration information to the second device, the first device also transmits the CSI measurement feedback mechanism to the second device. For example, the first device may select one CSI measurement feedback mechanism from k types of CSI measurement feedback mechanisms configured by the base station, and notify the second device of the selected CSI measurement feedback mechanism and its configuration information.

In addition, the CSI measurement configuration information and the CSI measurement feedback mechanism may be transmitted in the same piece of information, or may be transmitted in two different pieces of information, which is not limited in embodiments of the present disclosure.

In step 303, the second device transmits CSI measurement feedback information to the first device according to the CSI measurement configuration information and the CSI measurement feedback mechanism.

According to the CSI measurement configuration information, the second device determines on which CSI measurement reference signal resource/resources CSI measurement is performed. Moreover, according to the CSI measurement feedback mechanism, the second device determines the manner for performing CSI measurement and feedback, and obtains the measurement result by performing the CSI measurement according to the manner mentioned above and transmits the measurement result to the first device through the CSI measurement feedback information.

It is to be noted that in this embodiment, the second device obtaining the CSI measurement feedback mechanism from the first device is only taken as an example for introduction and description. In some other possible embodiments, the second device may also obtain the CSI measurement feedback mechanism from the base station. For example, the second device receives the feedback mechanism configuration information transmitted by the base station, and determines the CSI measurement feedback mechanism adopted when performing the CSI measurement feedback to the first device based on the information mentioned above.

In summary, in the technical solutions provided in embodiments of the present disclosure, multiple CSI measurement feedback mechanisms are predefined, so that devices in V2X direct communication can select an appropriate CSI measurement feedback mechanism for CSI measurement and feedback according to actual needs.

It is to be noted that, in the above method embodiments, the technical solution of the present disclosure is introduced only from the perspective of the interaction between the first device and the second device. The above steps related to the first device may be implemented separately as the CSI measurement feedback method in the V2X direct communication scenario on the first device side, and the above steps related to the second device can be separately implemented as the CSI measurement feedback method in the V2X direct communication scenario on the second device side.

The following are apparatus embodiments of the present disclosure, which may be configured to implement the method embodiments of the present disclosure. For details that are not disclosed in the apparatus embodiments of the present disclosure, please refer to the method embodiments of the present disclosure.

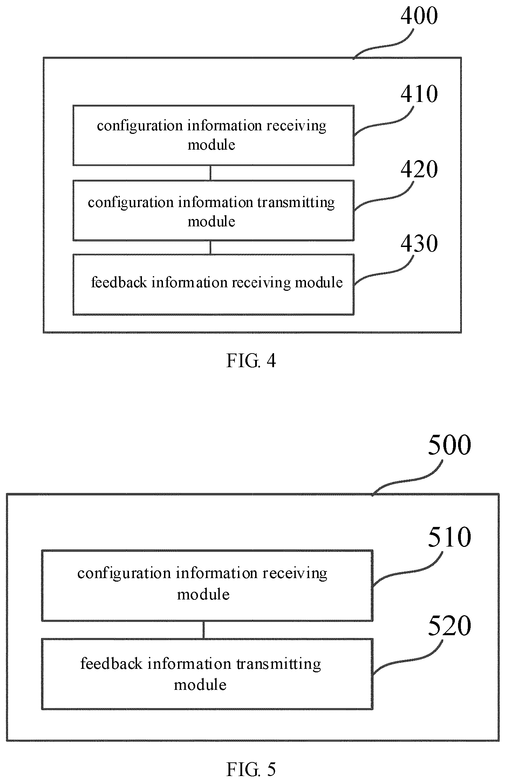

FIG 4 is a block diagram illustrating an apparatus for CSI measurement feedback in a V2X direct communication scenario according to an embodiment. The apparatus has the function of realizing the above method embodiments on the first device side, and the function may be realized by hardware, or by hardware executing corresponding software. The apparatus 400 conclude a configuration information receiving module 410, a configuration information transmitting module 420 and a feedback information receiving module 430.

The configuration information receiving module 410 is configured to receive CSI measurement reference signal resource pool configuration information transmitted by a base station, in which the CSI measurement reference signal resource pool configuration information includes identification information of n CSI measurement reference signal resources in a CSI measurement reference signal resource set, in which n is a positive integer.

The configuration information transmitting module 420 is configured to transmit CSI measurement configuration information to a second device in direct communication with the first device, in which the CSI measurement configuration information includes the identification information of m CSI measurement reference signal resources in the n CSI measurement reference signal resources, in which m is a positive integer less than or equal to n.

The feedback information receiving module 430 is configured to receive CSI measurement feedback information transmitted by the second device.

In summary, in the technical solution provided in the embodiments of the present disclosure, the base station configures the CSI measurement reference signal resource set for the first device in the V2X direct communication, and the first device transmits CSI measurement configuration information to the second device in direct communication with the first device, so that the second device transmits the CSI measurement feedback information to the first device after the second device performs CSI measurement according to the CSI measurement configuration information. In this way, for the V2X direct communication scenario, a method for CSI measurement feedback is provided, so that a more suitable MCS can be selected for information transmission and the spectrum efficiency is improved.

Alternatively or additionally, the CSI measurement reference signal resource set includes at least one of the following CSI measurement reference signal resources: a sidelink NZP CSI-RS resource, a sidelink ZP CSI-RS resource, a sidelink DRS resource, a sidelink SSB resource, or a sidelink DMRS resource.

Alternatively or additionally, the CSI measurement reference signal resource pool configuration information further includes at least one of the following: a subcarrier spacing, a cyclic prefix (CP), a frequency domain position, a time domain position, a Port, or a Quasi co-location indication corresponding to the CSI measurement reference signal resource.

The configuration information receiving module 410 is further configured to receive feedback mechanism configuration information transmitted by the base station, in which the feedback mechanism configuration information includes configuration information of k types of CSI measurement feedback mechanisms, in which k is a positive integer; and the configuration information transmitting module 420 is further configured to transmit the CSI measurement feedback mechanism to the second device.

Alternatively or additionally, the k types of CSI measurement feedback mechanisms include at least one of the following: a periodic measurement feedback mechanism, an aperiodic measurement feedback mechanism, and a semi-static measurement feedback mechanism.

Alternatively or additionally, the configuration information of the CSI measurement feedback mechanism includes at least one of the following: time domain configuration information, frequency domain configuration information, and feedback content configuration information; in which the time domain configuration information is configured to indicate a time of transmitting the CSI measurement feedback information, the frequency domain configuration information is configured to indicate frequency domain resources for transmitting the CSI measurement feedback information, and the feedback content configuration information is configured to indicate the content included in the CSI measurement feedback information.

The feedback information receiving module 430 is configured to: receive the CSI measurement feedback information transmitted by the second device through PSFCH; or, receive the CSI measurement feedback information transmitted by the second device through PSSCH.

Alternatively or additionally, the CSI measurement feedback information includes at least one of the following: a CQI, a PMI, a RI, a L1-RSRP, a L1-SINR, and the identification information of the measured CSI measurement reference signal resource.

FIG 5 is a block diagram illustrating an apparatus for CSI measurement feedback in a V2X direct communication scenario according to another embodiment. The apparatus has the function of realizing the above method embodiments on the second device side, and the function may be realized by hardware, or by hardware executing corresponding software. The apparatus 500 include a configuration information receiving module 510 and a feedback information transmitting module 520.

The configuration information receiving module 510 is configured to receive CSI measurement configuration information transmitted by a first device in direct communication with the second device, in which the CSI measurement configuration information includes identification information of m CSI measurement reference signals in a CSI measurement reference signal resource set configured by a base station, in which m is a positive integer.

The feedback information transmitting module 520 is configured to transmit CSI measurement feedback information to the first device according to the CSI measurement configuration information.

In summary, in the technical solution provided in embodiments of the present disclosure, the base station configures the CSI measurement reference signal resource set for the first device in the V2X direct communication, and the first device transmits CSI measurement configuration information to the second device in direct communication with the first device, so that the second device transmits the CSI measurement feedback information to the first device after the second device performs CSI measurement according to the CSI measurement configuration information. In this way, for the V2X direct communication scenario, a method for CSI measurement feedback is provided, so that a more suitable MCS can be selected for information transmission and the spectrum efficiency is improved.

The configuration information receiving module 510 is further configured to receive a CSI measurement feedback mechanism transmitted by the first device or the base station; and the feedback information transmitting module 520 is further configured to transmit the CSI measurement feedback information to the first device according to the CSI measurement configuration information and the CSI measurement feedback mechanism.

It is to be noted that, when the apparatus provided by the above embodiments realizes its functions, the division of the above functional modules is used only as an example. In actual applications, the above functions can be allocated to different functional modules according to actual needs. That is, the content structure of the device is divided into different functional modules to complete all or part of the functions described above.

Regarding to the apparatus in the above embodiments, the specific operation manners in which each module performs has been described in detail in the embodiments of the method, and will not be elaborated here.

An apparatus for CSI measurement feedback in a V2X direct communication scenario is also provided in an embodiment of the present disclosure, which can implement the method for CSI measurement feedback in the V2X direct communication scenario in the present disclosure. The apparatus may be the first network device introduced in the above disclosure, and may also be set in the first device. The apparatus includes a processor, and a memory configured to store instructions executable by the processor. The processor is configured to: receive CSI measurement reference signal resource pool configuration information transmitted by a base station, in which the CSI measurement reference signal resource pool configuration information includes identification information of n CSI measurement reference signal resources in a CSI measurement reference signal resource set, in which n is a positive integer; transmit CSI measurement configuration information to a second device in direct communication with the first device, in which the CSI measurement configuration information includes the identification information of m CSI measurement reference signal resources in the n CSI measurement reference signal resources, in which m is a positive integer less than or equal to n; and receive the CSI measurement feedback information transmitted by the second device.

Alternatively or additionally, the CSI measurement reference signal resource set includes at least one of the following CSI measurement reference signal resources: a sidelink NZP CSI-RS resource, a sidelink ZP CSI-RS resource, a sidelink DRS resource, a sidelink SSB resource, or a sidelink DMRS resource.

Alternatively or additionally, the CSI measurement reference signal resource pool configuration information further includes at least one of the following: a subcarrier spacing, a cyclic prefix (CP), a frequency domain position, a time domain position, a Port, and a Quasi co-location indication corresponding to the CSI measurement reference signal resource.

Alternatively or additionally, the processor is further configured to: receive feedback mechanism configuration information transmitted by the base station, in which the feedback mechanism configuration information includes configuration information of k types of CSI measurement feedback mechanisms, in which k is a positive integer; and transmit the CSI measurement feedback mechanism to the second device.

Alternatively or additionally, the k types of CSI measurement feedback mechanisms include at least one of the following: a periodic measurement feedback mechanism, an aperiodic measurement feedback mechanism, and a semi-static measurement feedback mechanism.

Alternatively or additionally, the configuration information of the CSI measurement feedback mechanism includes at least one of the following: time domain configuration information, frequency domain configuration information, and feedback content configuration information; in which the time domain configuration information is configured to indicate a time of transmitting the CSI measurement feedback information, the frequency domain configuration information is configured to indicate frequency domain resources for transmitting the CSI measurement feedback information, and the feedback content configuration information is configured to indicate the content included in the CSI measurement feedback information.

Alternatively or additionally, the processor is configured to: receive the CSI measurement feedback information transmitted by the second device through PSFCH; or, receive the CSI measurement feedback information transmitted by the second device through PSSCH.

Alternatively or additionally, the CSI measurement feedback information includes at least one of the following: a CQI, a PMI, a RI, a L1-RSRP, a L1-SINR, and the identification information of the measured CSI measurement reference signal resource.

An apparatus for CSI measurement feedback in a V2X direct communication scenario is also provided in an embodiment of the present disclosure, which can implement the method for CSI measurement feedback in the V2X direct communication scenario in the present disclosure. The apparatus may be the second network device introduced in the above disclosure, and may also be set in the second device. The apparatus includes a processor, and a memory configured to store instructions executable by the processor. The processor is configured to: receive CSI measurement configuration information transmitted by a first device in direct communication with the second device, in which the CSI measurement configuration information includes identification information of m CSI measurement reference signals in a CSI measurement reference signal resource set configured by a base station, in which m is a positive integer; and transmit CSI measurement feedback information to the first device according to the CSI measurement configuration information.

Alternatively or additionally, the processor is further configured to: receive a CSI measurement feedback mechanism transmitted by the first device or the base station; and transmit the CSI measurement feedback information to the first device according to the CSI measurement configuration information and the CSI measurement feedback mechanism.

From the perspective of the interaction between the first device and the second device, the above introduces methods provided in the embodiments of the present disclosure. It can be understood that the device (including the first device and the second device) includes hardware structures and /or software modules corresponding to execute specific functions with the aim to realize the above functions. Combined with units and algorithm steps of examples of embodiments disclosed in this present disclosure, the embodiments may be realized by hardware or the combination of hardware and computer software. Whether some function is executed by hardware or driving hardware by computer software depends on specific application and design constraints of the technical method. Those skilled in the art may use different methods for respective specific applications to realize the described functions, but such realization should not be considered as going beyond the scope of the technical solutions of the embodiments of the present disclosure.

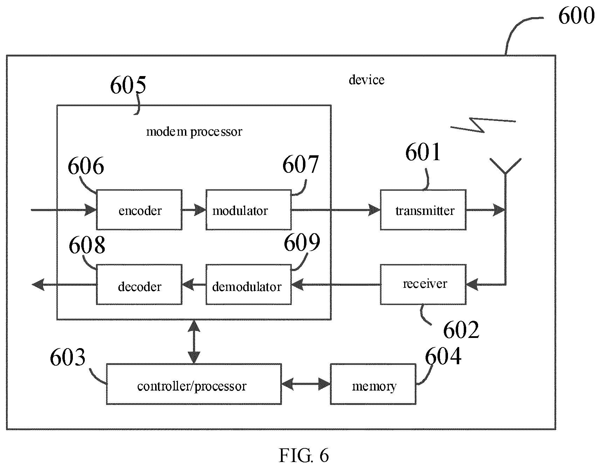

FIG 6 is a schematic diagram illustrating a device 600 in a V2X direct communication scenario according to an embodiment not forming part of the present invention. The device 600 may be a device for direct communication with other devices in a V2X business scenario, such as on-board devices, terminals and other electronic devices. The device 600 may be a first device or a second device described above.

The device 600 includes a transmitter 601, a receiver 602 and a processor 603. The processor 603 may be a controller, which is represented as a "controller/processor 603" in FIG 6. Alternatively or additionally, the device 600 may further include a modem processor 605, in which the modem processor 605 may include an encoder 606, a modulator 607, a decoder 608, and a demodulator 609.

In an example, the transmitter 601 adjusts (e.g. performs analog conversion, filter, amplification, and up conversion on) the output samples and generates an uplink signal, which is transmitted to the access network device via an antenna. On the downlink, the antenna receives the downlink signal transmitted by the access network device. The receiver 602 adjusts (e.g. performs filter, amplification, down conversion, digitization on) the signal received from the antenna and provides input samples. In the modem processor 605, the encoder 606 receives business data and signaling messages to be transmitted on the uplink, and processes (e.g. formats, encodes, and interleaves) the business data and signaling messages. The modulator 607 further processes (e.g. performs symbol mapping and modulation on) the encoded business data and signaling messages and provides output samples. The demodulator 609 processes (e.g. demodulates) the input samples and provides symbol estimation. The decoder 608 processes (e.g. deinterleaves and decodes) the symbol estimation and provides decoded data and signaling messages transmitted to the device 600. The encoder 606, the modulator 607, the demodulator 609, and the decoder 608 may be realized by a synthesized modem processor 605. These units are processed according to the wireless access technology adopted by the wireless access network (for example, the access technology of LTE and other evolved systems). It should be noted that when the device 600 does not include the modem processor 605, the above functions of the modem processor 605 may also be realized by the processor 603.

The processor 603 controls and manages the actions of the device 600, and is used to execute the process performed by the device 600 in the above embodiments of the present disclosure. For example, the processor 603 is further configured to execute each step of the transmitting device or the receiving device in the above method embodiments, and/or other steps of the technical solutions described in the embodiments of the present disclosure.

Further, the device 600 may further include a memory 604, in which the memory 604 is configured to store program codes and data for the device 600.

It could be understood that FIG 6 only illustrates a simplified design of the device 600. In practical applications, the device 600 may include any number of transmitters, receivers, processors, modem processors, memories, and the like, and all devices that can implement the embodiments of the present disclosure are within the protection scope of the embodiments of the present disclosure.

A non-transitory computer-readable storage medium with computer programs stored on is provided in embodiments of the present disclosure. When the computer programs are executed by the device 600, the method for CSI measurement feedback in the V2X direct communication scenario is implemented as described before.

It should be understood that "several" mentioned in this disclosure means two or more than two. "And/or" describes the association of the associated object, indicating that there can be three types of relationships, for example, A and/or B may mean that, A exists alone, A and B exist at the same time, and B exists alone. The character "/" generally indicates that the associated objects before and after are in an "or" relationship.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It should be understood that the present disclosure is not limited to the precise structure described above and shown in the drawings, and various modifications and changes can be made without departing from its scope. The scope of the present disclosure is only limited by the appended claims.

## Claims

1. A method for channel state information (CSI) measurement feedback in a V2X direct communication scenario, **characterized in that** the method comprises:
receiving (201), by a first device, CSI measurement reference signal resource pool configuration information transmitted by a base station, wherein the CSI measurement reference signal resource pool configuration information comprises identification information of n CSI measurement reference signal resources in a CSI measurement reference signal resource set, where n is a positive integer;
transmitting (202), by the first device, CSI measurement configuration information to a second device in direct communication with the first device, wherein the CSI measurement configuration information comprises the identification information of m CSI measurement reference signal resources in the n CSI measurement reference signal resources, where m is a positive integer less than or equal to n; and
receiving (203), by the first device, CSI measurement feedback information transmitted by the second device.

2. The method of claim 1, wherein the CSI measurement reference signal resource set comprises at least one of following CSI measurement reference signal resources: a sidelink non-zero power CSI reference signal (NZP CSI-RS) resource, a sidelink zero power CSI reference signal (ZP CSI-RS) resource, a sidelink discovery reference signal (DRS) resource, a sidelink synchronization signal block (SSB) resource, and a sidelink demodulation reference signal (DMRS) resource.

3. The method of claim 1 or 2, wherein the CSI measurement reference signal resource pool configuration information further comprises at least one of a subcarrier spacing, a cyclic prefix (CP), a frequency domain position, a time domain position, a port, and a Quasi co-location indication corresponding to the CSI measurement reference signal resource.

4. The method of any of claims 1-3, further comprising:
receiving, by the first device, feedback mechanism configuration information transmitted by the base station, wherein the feedback mechanism configuration information comprises configuration information of k types of CSI measurement feedback mechanisms, where k is a positive integer; and
transmitting, by the first device, the CSI measurement feedback mechanism to the second device.

5. The method of claim 4, wherein the k types of CSI measurement feedback mechanisms comprise at least one of a periodic measurement feedback mechanism, an aperiodic measurement feedback mechanism, and a semi-static measurement feedback mechanism.

6. The method of claim 4, wherein the feedback mechanism configuration information of the CSI measurement feedback mechanism comprises at least one of time domain configuration information, frequency domain configuration information, and feedback content configuration information;
wherein the time domain configuration information is configured to indicate a time of transmitting the CSI measurement feedback information, the frequency domain configuration information is configured to indicate frequency domain resources for transmitting the CSI measurement feedback information, and the feedback content configuration information is configured to indicate content included in the CSI measurement feedback information.

7. The method of any one of claims 1-6, wherein receiving (203), by the first device, CSI measurement feedback information transmitted by the second device, comprises at least one of:
receiving, by the first device, the CSI measurement feedback information transmitted by the second device through a physical sidelink feedback channel (PSFCH); and
receiving, by the first device, the CSI measurement feedback information transmitted by the second device through a physical sidelink shared channel (PSSCH).

8. The method of any one of claims 1-7, wherein the CSI measurement feedback information comprises at least one of a channel quality indicator (CQI), a precoding matrix indicator (PMI), a rank indicator (RI), a layer 1-reference signal received power (L1-RSRP), a layer 1-signal to interference plus noise ratio (L1-SINR), and identification information of the measured CSI measurement reference signal resource.

9. A method for channel state information (CSI) measurement feedback in a V2X direct communication scenario, **characterized in that** the method comprises:
receiving (202), by a second device, CSI measurement configuration information transmitted by a first device in direct communication with the second device, wherein the CSI measurement configuration information comprises identification information of m CSI measurement reference signal resources in a CSI measurement reference signal resource set of n CSI measurement signal resources configured by a base station, where m and n are positive integers and m is less than or equal to n; and
transmitting (203) by the second device, CSI measurement feedback information to the first device according to the CSI measurement configuration information.

10. The method of claim 9, further comprising:
receiving by the second device, a CSI measurement feedback mechanism transmitted by the first device or the base station;
wherein transmitting by the second device, the CSI measurement feedback information to the first device according to the CSI measurement configuration information, comprises:
transmitting, by the second device, the CSI measurement feedback information to the first device according to the CSI measurement configuration information and the CSI measurement feedback mechanism.

11. An apparatus (400) for channel state information (CSI) measurement feedback in a V2X direct communication scenario, applied to a first device, **characterized in that** the apparatus comprises:
a configuration information receiving module (410), configured to receive CSI measurement reference signal resource pool configuration information transmitted by a base station, wherein the CSI measurement reference signal resource pool configuration information comprises identification information of n CSI measurement reference signal resources in a CSI measurement reference signal resource set, where n is a positive integer;
a configuration information transmitting module (420), configured to transmit CSI measurement configuration information to a second device in direct communication with the first device, wherein the CSI measurement configuration information comprises the identification information of m CSI measurement reference signal resources in the n CSI measurement reference signal resources, where m is a positive integer less than or equal to n; and
a feedback information receiving module (430), configured to receive CSI measurement feedback information transmitted by the second device.

12. The apparatus of claim 11, wherein
the configuration information receiving module is further configured to receive feedback mechanism configuration information transmitted by the base station, wherein the feedback mechanism configuration information comprises configuration information of k types of CSI measurement feedback mechanisms, where k is a positive integer; and
the configuration information transmitting module is further configured to transmit the CSI measurement feedback mechanism to the second device.

13. The method of claim 11 or 12, wherein the feedback information receiving module is configured to:
receive the CSI measurement feedback information transmitted by the second device through a physical sidelink feedback channel (PSFCH);
or,
receive the CSI measurement feedback information transmitted by the second device through a physical sidelink shared channel (PSSCH).

14. An apparatus (500) for channel state information (CSI) measurement feedback in a V2X direct communication scenario, applied to a second device, **characterized in that** the apparatus comprises:
a configuration information receiving module (510), configured to receive CSI measurement configuration information transmitted by a first device in direct communication with the second device, wherein the CSI measurement configuration information comprises identification information of m CSI measurement reference signal resources in a CSI measurement reference signal resource set of n CSI measurement signal resources configured by a base station, where m and n are positive integers and m is less than or equal to n; and
a feedback information transmitting module (520), configured to transmit CSI measurement feedback information to the first device according to the CSI measurement configuration information.

15. The apparatus of claim 14, wherein
the configuration information receiving module (510) is further configured to receive a CSI measurement feedback mechanism transmitted by the first device or the base station; and
the feedback information transmitting module (520) is further configured to transmit the CSI measurement feedback information to the first device according to the CSI measurement configuration information and the CSI measurement feedback mechanism.

## Patentansprüche

1. Ein Verfahren zur Kanalzustandsinformations (CSI) -Messrückmeldung in einem V2X-Direktkommunikationsszenario, **dadurch gekennzeichnet, dass** das Verfahren umfasst:
Empfangen (201) durch eine erste Vorrichtung von Konfigurationsinformationen über einen CSI-Mess-Referenzsignal-Ressourcenpool, gesendet von einer Basisstation, wobei die Konfigurationsinformationen über den CSI-Mess-Referenzsignal-Ressourcenpool Identifikationsinformationen von n CSI-Mess-Referenzsignal-Ressourcen in einem Satz von CSI-Mess-Referenzsignal-Ressourcen umfassen, wobei n eine positive ganze Zahl ist;
Senden (202) durch die erste Vorrichtung von CSI-Messkonfigurationsinformationen an eine zweite Vorrichtung, die sich in Direktkommunikation mit der ersten Vorrichtung befindet, wobei die CSI-Messkonfigurationsinformationen die Identifikationsinformationen von m CSI-Mess-Referenzsignal-Ressourcen in den n CSI-Mess-Referenzsignal-Ressourcen umfassen, wobei m eine positive ganze Zahl ist, die kleiner oder gleich n ist; und
Empfangen (203) durch die erste Vorrichtung von CSI-Messrückmeldeinformationen, gesendet von der zweiten Vorrichtung.

2. Das Verfahren nach Anspruch 1, wobei der Satz von CSI-Mess-Referenzsignal-Ressourcen mindestens eine der folgenden CSI-Mess-Referenzsignal-Ressourcen umfasst: eine Sidelink-Non-Zero-Power-CSI-Referenzsignal (NZP CSI-RS)-Ressource, eine Sidelink-Zero-Power-CSI-Referenzsignal (ZP CSI-RS)-Ressource, eine Sidelink-Discovery-Referenzsignal (DRS)-Ressource, einen Sidelink-Synchronisierungssignalblock (SSB) und eine Sidelink-Demodulationsreferenzsignal (DMRS)-Ressource.

3. Das Verfahren nach Anspruch 1 oder 2, wobei die Konfigurationsinformationen über den CSI-Mess-Referenzsignal-Ressourcenpool ferner mindestens eine der folgenden Angaben umfassen: eine Unterträgerabstandskonfiguration, ein zyklisches Präfix (CP), eine Frequenzbereichsposition, eine Zeitbereichsposition, einen Port und eine Quasi Co-Location-Indikation, die der CSI-Mess-Referenzsignal-Ressource zugeordnet ist.

4. Das Verfahren nach einem der Ansprüche 1-3, ferner umfassend:
Empfangen durch die erste Vorrichtung von Konfigurationsinformationen über einen Rückmeldemechanismus, gesendet von der Basisstation, wobei die Konfigurationsinformationen über den Rückmeldemechanismus Konfigurationsinformationen über k Arten von CSI-Messrückmeldemechanismen umfassen, wobei k eine positive ganze Zahl ist; und
Senden durch die erste Vorrichtung des CSI-Messrückmeldemechanismus an die zweite Vorrichtung.

5. Das Verfahren nach Anspruch 4, wobei die k Arten von CSI-Messrückmeldemechanismen mindestens eine der folgenden Mechanismen umfassen: einen periodischen Messrückmeldemechanismus, einen aperiodischen Messrückmeldemechanismus und einen semistatischen Messrückmeldemechanismus.

6. Das Verfahren nach Anspruch 4, wobei die Konfigurationsinformationen über den Rückmeldemechanismus des CSI-Messrückmeldemechanismus mindestens eine der folgenden Informationen umfassen: Zeitbereichskonfigurationsinformationen, Frequenzbereichskonfigurationsinformationen und Rückmeldeinhaltskonfigurationsinformationen;
wobei die Zeitbereichskonfigurationsinformationen dazu eingerichtet sind, eine Zeit für das Senden der CSI-Messrückmeldeinformationen anzuzeigen, die Frequenzbereichskonfigurationsinformationen dazu eingerichtet sind, Frequenzbereichsressourcen für das Senden der CSI-Messrückmeldeinformationen anzuzeigen, und die Rückmeldeinhaltskonfigurationsinformationen dazu eingerichtet sind, den Inhalt anzuzeigen, der in den CSI-Messrückmeldeinformationen enthalten ist.

7. Das Verfahren nach einem der Ansprüche 1-6, wobei das Empfangen (203) durch die erste Vorrichtung von CSI-Messrückmeldeinformationen, gesendet von der zweiten Vorrichtung, mindestens eine der folgenden Aktionen umfasst:
Empfangen durch die erste Vorrichtung der CSI-Messrückmeldeinformationen, gesendet von der zweiten Vorrichtung über einen Physical-Sidelink-Feedback-Kanal (PSFCH); und
Empfangen durch die erste Vorrichtung der CSI-Messrückmeldeinformationen, gesendet von der zweiten Vorrichtung über einen Physical-Sidelink-Shared-Kanal (PSSCH).

8. Das Verfahren nach einem der Ansprüche 1-7, wobei die CSI-Messrückmeldeinformationen mindestens eine der folgenden Informationen umfassen: einen Kanalqualitätsindikator (CQI), einen Präcodermatrixindikator (PMI), einen Rangindikator (RI), eine Layer-1-Referenzsignal-Empfangsleistung (L1-RSRP), ein Layer-1-Signal-zu-Interferenz-plus-Rausch-Verhältnis (L1-SINR) und Identifikationsinformationen der gemessenen CSI-Mess-Referenzsignal-Ressource.

9. Ein Verfahren zur Kanalzustandsinformations (CSI)-Messrückmeldung in einem V2X-Direktkommunikationsszenario, **dadurch gekennzeichnet, dass** das Verfahren umfasst:
Empfangen (202) durch eine zweite Vorrichtung von CSI-Messkonfigurationsinformationen, gesendet von einer ersten Vorrichtung, die sich in Direktkommunikation mit der zweiten Vorrichtung befindet, wobei die CSI-Messkonfigurationsinformationen Identifikationsinformationen von m CSI-Mess-Referenzsignal-Ressourcen in einem Satz von n CSI-Mess-Referenzsignal-Ressourcen umfassen, der von einer Basisstation konfiguriert wird, wobei m und n positive ganze Zahlen sind und m kleiner oder gleich n ist; und
Senden (203) durch die zweite Vorrichtung von CSI-Messrückmeldeinformationen an die erste Vorrichtung gemäß den CSI-Messkonfigurationsinformationen.

10. Das Verfahren nach Anspruch 9, ferner umfassend:
Empfangen durch die zweite Vorrichtung eines CSI-Messrückmeldemechanismus, gesendet von der ersten Vorrichtung oder von der Basisstation;
wobei das Senden durch die zweite Vorrichtung der CSI-Messrückmeldeinformationen an die erste Vorrichtung gemäß den CSI-Messkonfigurationsinformationen umfasst:
Senden durch die zweite Vorrichtung der CSI-Messrückmeldeinformationen an die erste Vorrichtung gemäß den CSI-Messkonfigurationsinformationen und dem CSI-Messrückmeldemechanismus.

11. Eine Vorrichtung (400) zur Kanalzustandsinformations (CSI)-Messrückmeldung in einem V2X-Direktkommunikationsszenario, angewendet auf eine erste Vorrichtung, **dadurch gekennzeichnet, dass** die Vorrichtung umfasst:
ein Modul (410) zum Empfangen von Konfigurationsinformationen über einen CSI-Mess-Referenzsignal-Ressourcenpool, gesendet von einer Basisstation, wobei die Konfigurationsinformationen über den CSI-Mess-Referenzsignal-Ressourcenpool Identifikationsinformationen von n CSI-Mess-Referenzsignal-Ressourcen in einem Satz von CSI-Mess-Referenzsignal-Ressourcen umfassen, wobei n eine positive ganze Zahl ist;
ein Modul (420) zum Senden von CSI-Messkonfigurationsinformationen an eine zweite Vorrichtung, die sich in Direktkommunikation mit der ersten Vorrichtung befindet, wobei die CSI-Messkonfigurationsinformationen die Identifikationsinformationen von m CSI-Mess-Referenzsignal-Ressourcen in den n CSI-Mess-Referenzsignal-Ressourcen umfassen, wobei m eine positive ganze Zahl ist, die kleiner oder gleich n ist; und
ein Modul (430) zum Empfangen von CSI-Messrückmeldeinformationen, gesendet von der zweiten Vorrichtung.

12. Die Vorrichtung nach Anspruch 11, wobei
das Modul zum Empfangen von Konfigurationsinformationen ferner dazu eingerichtet ist, Konfigurationsinformationen über einen Rückmeldemechanismus zu empfangen, gesendet von der Basisstation, wobei die Konfigurationsinformationen über den Rückmeldemechanismus Konfigurationsinformationen über k Arten von CSI-Messrückmeldemechanismen umfassen, wobei k eine positive ganze Zahl ist; und das Modul zum Senden von Konfigurationsinformationen ferner dazu eingerichtet ist, den CSI-Messrückmeldemechanismus an die zweite Vorrichtung zu senden.

13. Das Verfahren nach Anspruch 11 oder 12, wobei das Modul zum Empfangen von Rückmeldeinformationen dazu eingerichtet ist:
die CSI-Messrückmeldeinformationen, gesendet von der zweiten Vorrichtung, über einen Physical-Sidelink-Feedback-Kanal (PSFCH) zu empfangen;
oder
die CSI-Messrückmeldeinformationen, gesendet von der zweiten Vorrichtung, über einen Physical-Sidelink-Shared-Kanal (PSSCH) zu empfangen.

14. Eine Vorrichtung (500) zur Kanalzustandsinformations (CSI)-Messrückmeldung in einem V2X-Direktkommunikationsszenario, angewendet auf eine zweite Vorrichtung, **dadurch gekennzeichnet, dass** die Vorrichtung umfasst:
ein Modul (510) zum Empfangen von CSI-Messkonfigurationsinformationen, gesendet von einer ersten Vorrichtung, die sich in Direktkommunikation mit der zweiten Vorrichtung befindet, wobei die CSI-Messkonfigurationsinformationen Identifikationsinformationen von m CSI-Mess-Referenzsignal-Ressourcen in einem Satz von n CSI-Mess-Referenzsignal-Ressourcen umfassen, die von einer Basisstation konfiguriert werden, wobei m und n positive ganze Zahlen sind und m kleiner oder gleich n ist; und
ein Modul (520) zum Senden von CSI-Messrückmeldeinformationen an die erste Vorrichtung gemäß den CSI-Messkonfigurationsinformationen.

15. Die Vorrichtung nach Anspruch 14, wobei
das Modul (510) zum Empfangen von Konfigurationsinformationen ferner dazu eingerichtet ist, einen CSI-Messrückmeldemechanismus zu empfangen, gesendet von der ersten Vorrichtung oder von der Basisstation; und
das Modul (520) zum Senden von Rückmeldeinformationen ferner dazu eingerichtet ist, die CSI-Messrückmeldeinformationen an die erste Vorrichtung gemäß den CSI-Messkonfigurationsinformationen und dem CSI-Messrückmeldemechanismus zu senden.

## Revendications

1. Procédé de rétroaction de mesure d'informations sur l'état du canal (CSI) dans un scénario de communication directe V2X, **caractérisé en ce que** le procédé comprend:
la réception (201), par un premier dispositif, d'informations de configuration de groupe de ressources de signal de référence de mesure CSI transmises par une station de base, les informations de configuration de groupe de ressources de signal de référence de mesure CSI comprenant des informations d'identification de n ressources de signal de référence de mesure CSI dans un ensemble de ressources de signal de référence de mesure CSI, n étant un nombre entier positif;
la transmission (202), par le premier dispositif, des informations de configuration de mesure CSI à un second dispositif en communication directe avec le premier dispositif, dans lequel les informations de configuration de mesure CSI comprennent les informations d'identification de m ressources de signal de référence de mesure CSI parmi les n ressources de signal de référence de mesure CSI, m étant un nombre entier positif inférieur ou égal à n; et
la réception (203), par le premier dispositif, des informations de rétroaction de mesure CSI transmises par le second dispositif.

2. Procédé selon la revendication 1, dans lequel l'ensemble des ressources de signal de référence de mesure CSI comprend au moins l'une des ressources de signal de référence de mesure CSI suivantes: une ressource de signal de référence CSI de puissance non nulle en liaison latérale (NZP CSI-RS), une ressource de signal de référence CSI de puissance nulle en liaison latérale (ZP CSI-RS), une ressource de signal de référence de découverte de liaison latérale (DRS), une ressource de bloc de signaux de synchronisation en liaison latérale (SSB), et une ressource de signal de référence de démodulation en liaison latérale (DMRS).

3. Procédé selon la revendication 1 ou 2, dans lequel les informations de configuration de groupe de ressources de signal de référence de mesure CSI comprennent en outre au moins l'un des éléments suivants: un espacement de sous-porteuse, un préfixe cyclique (CP), une position de domaine fréquentiel, une position de domaine temporel, un port et une indication de colocation Quasi correspondant à la ressource de signal de référence de mesure CSI.

4. Procédé selon l'une quelconque des revendications 1 à 3, comprenant en outre:
la réception, par le premier dispositif, des informations de configuration de mécanisme de rétroaction transmises par la station de base, les informations de configuration de mécanisme de rétroaction comprenant des informations de configuration de k types de mécanismes de rétroaction de mesure CSI, k étant un nombre entier positif; et
la transmission, par le premier dispositif, du mécanisme de rétroaction de mesure CSI au second dispositif.

5. Procédé selon la revendication 4, dans lequel les k types de mécanismes de rétroaction de mesure CSI comprennent au moins l'un des éléments suivants: un mécanisme de rétroaction de mesure périodique, un mécanisme de rétroaction de mesure apériodique et un mécanisme de rétroaction de mesure semi-statique.

6. Procédé selon la revendication 4, dans lequel les informations de configuration de mécanisme de rétroaction de mesure CSI comprennent au moins l'une des informations suivantes: des informations de configuration de domaine temporel, des informations de configuration de domaine fréquentiel et des informations de configuration de contenu de rétroaction;
dans lequel les informations de configuration de domaine temporel sont configurées pour indiquer le moment de la transmission des informations de rétroaction de mesure CSI, les informations de configuration de domaine fréquentiel sont configurées pour indiquer les ressources de domaine fréquentiel pour la transmission des informations de rétroaction de mesure CSI, et les informations de configuration de contenu de rétroaction sont configurées pour indiquer le contenu inclus dans les informations de rétroaction de mesure CSI.

7. Procédé selon l'une quelconque des revendications 1 à 6, dans lequel la réception (203), par le premier dispositif, des informations de rétroaction de mesure CSI transmises par le second dispositif, comprend au moins l'une des opérations suivantes:
recevoir, par le premier dispositif, les informations de rétroaction de mesure CSI transmises par le second dispositif par l'intermédiaire d'un canal physique de rétroaction de liaison latérale (PSFCH); et
recevoir, par le premier dispositif, les informations de rétroaction de mesure CSI transmises par le second dispositif par l'intermédiaire d'un canal physique de liaison latérale partagé (PSSCH).

8. Procédé selon l'une des revendications 1 à 7, dans lequel les informations de rétroaction de mesure CSI comprennent au moins un indicateur de qualité du canal (CQI), un indicateur de matrice de précodage (PMI), un indicateur de rang (RI), une puissance de signal de référence reçu de couche 1 (L1-RSRP), un rapport signal à interférence plus bruit de couche 1 (L1-SINR) et des informations d'identification de la ressource de signal de référence de mesure CSI mesurée.

9. Procédé de rétroaction de mesure d'informations sur l'état du canal (CSI) dans un scénario de communication directe V2X, **caractérisé en ce que** le procédé comprend:
la réception (202), par le second dispositif, des informations de configuration de mesure CSI transmises par un premier dispositif en communication directe avec le second dispositif, dans lequel les informations de configuration de mesure CSI comprennent des informations d'identification de m ressources de signal de référence de mesure CSI dans un ensemble de ressources de signal de référence de mesure CSI de n ressources de signal de mesure CSI configurées par une station de base, m et n étant des nombres entiers positifs et m étant inférieur ou ou égal à n; et
la transmission (203), par le second dispositif, d'informations de rétroaction de mesure CSI au premier dispositif en fonction des informations de configuration de mesure CSI.

10. Procédé selon la revendication 9, comprenant en outre:
la réception, par le second dispositif, d'un mécanisme de rétroaction de mesure CSI transmis par le premier dispositif ou la station de base;
dans lequel la transmission par le second dispositif des informations de rétroaction de mesure CSI au premier dispositif en fonction des informations de configuration de mesure CSI, consiste à:
transmettre, par le second dispositif, les informations de rétroaction de mesure CSI au premier dispositif en fonction des informations de configuration de mesure CSI et du mécanisme de rétroaction de mesure CSI.

11. Appareil de rétroaction de mesure d'informations sur l'état du canal (CSI) dans un scénario de communication directe V2X, appliqué à un premier dispositif, **caractérisé en ce que** l'appareil comprend:
un module de réception des informations de configuration (410), configuré pour recevoir des informations de configuration de groupe de ressources de signal de référence de mesure CSI transmises par une station de base, les informations de configuration de groupe de ressources de signal de référence de mesure CSI comprenant des informations d'identification de n ressources de signal de référence de mesure CSI dans un ensemble de ressources de signal de référence de mesure CSI, n étant un nombre entier positif;
un module de transmission d'informations de configuration (420), configuré pour transmettre des informations de configuration de mesure CSI à un second dispositif en communication directe avec le premier dispositif, dans lequel les informations de configuration de mesure CSI comprennent les informations d'identification de m ressources de signal de référence de mesure CSI parmi les n ressources de signal de référence de mesure CSI, m étant un nombre entier positif inférieur ou égal à n; et
un module de réception des informations de rétroaction (430), configuré pour recevoir les informations de rétroaction de mesure CSI transmises par le second dispositif.

12. Appareil selon la revendication 11, dans lequel
le module de réception des informations de configuration est en outre configuré pour recevoir les informations de configuration de mécanisme de rétroaction transmises par la station de base, les informations de configuration de mécanisme de rétroaction comprenant des informations de configuration de k types de mécanismes de rétroaction de mesure CSI, k étant un nombre entier positif; et
le module de transmission d'informations de configuration est en outre configuré pour transmettre le mécanisme de rétroaction de mesure CSI au second dispositif.

13. Procédé selon la revendication 11 ou 12, dans lequel le module de réception d'informations de rétroaction est configuré pour:
recevoir les informations de rétroaction de mesure CSI transmises par le second dispositif par l'intermédiaire d'un canal physique de rétroaction de liaison latérale (PSFCH);
ou,
recevoir les informations de rétroaction de mesure CSI transmises par le second dispositif par l'intermédiaire d'un canal physique de liaison latérale partagé (PSSCH).

14. Appareil (500) de rétroaction de mesure d'informations sur l'état du canal (CSI) dans un scénario de communication directe V2X, appliqué à un second dispositif, **caractérisé en ce que** l'appareil comprend:
un module de réception des informations de configuration (510), configuré pour recevoir des informations de configuration de mesure CSI transmises par un premier dispositif en communication directe avec le second dispositif, dans lequel les informations de configuration de mesure CSI comprennent des informations d'identification de m ressources de signal de référence de mesure CSI dans un ensemble de ressources de signal de référence de mesure CSI de n ressources de signal de mesure CSI configurées par une station de base, m et n étant des nombres entiers positifs et m étant inférieur ou égal à n; et
un module de transmission des informations de rétroaction (520), configuré pour transmettre les informations de rétroaction de mesure CSI au premier dispositif en fonction des informations de configuration de mesure CSI.

15. Appareil selon la revendication 14, dans lequel
le module de réception des informations de configuration (510) est en outre configuré pour recevoir un mécanisme de rétroaction de mesure CSI transmis par le premier dispositif ou la station de base; et
le module de transmission des informations de rétroaction (520) est en outre configuré pour transmettre les informations de rétroaction de mesure CSI au premier dispositif en fonction des informations de configuration de mesure CSI et du mécanisme de rétroaction de mesure CSI.
